# EUROPEAN PATENT SPECIFICATION

(11) **EP 0 509 094 B1**
(45) Date of publication and mention of the grant of the patent: **30.08.1995**
(21) Application number: 90916061.6
(22) Date of filing: 02.11.1990
(51) Int. Cl.: B29D 30/24, B29D 30/36

(54) **GREEN TIRE BUILDING APPARATUS**
ROHREIFENAUFBAUMASCHINE
APPAREIL DE PRODUCTION DE PNEUS CRUS

(43) Date of publication of application: 21.10.1992
(73) Proprietor: SUMITOMO RUBBER INDUSTRIES LIMITED, Chuo-ku Kobe-shi Hyogo 651 (JP)
(72) Inventor: IMAI, Hisashi, 1-8, Oaza Izumizaki Aza, Nishi-Shirakawa-gun Fukushima 969-01 (JP); HAYASE, Shinji 43-158, Oaza Dai Aza Karameyama, Fukushima 961 (JP); ANZAI, Shosaku 2-102, Aza Oshodanyama, Fukushima 961 (JP); MASUDA, Kenichi 92-3, Oaza Dai Aza Sakuraokamae, Fukushima 961 (JP); IIMURA, Masaaki, Ishikawa-gun Fukushima 979-63 (JP)
(74) Representative: Stewart, Charles Geoffrey
(86) International application number: PCT/JP90/01433
(87) International publication number: WO 92/07707

(56) References cited:
- JP-A- 5 557 448
- JP-A-58 122 845
- JP-B- 4 318 601
- No further relevant documents have been disclosed.

## Description

### TECHNICAL FIELD

The present invention relates to an improvement in a green tyre building apparatus, and more particularly relates to an improvement in a green tyre building apparatus employed in so-called single stage building.

### BACKGROUND ART

A method is known in which a green tyre is built using a single stage building apparatus which comprises a pair of right and left shoulder former sections and a central former section. Each of the shoulder formers has a bead lock mechanism, and supports the radial inside of a collapsed or non-inflated ply turn-up bladder by means of a cylindrical member which thus provides a firm surface. The shoulder former sections are simultaneously movable in the axial direction together and apart. A tyre component such as a ply is bound around the outer circumference of the former sections to begin the assembly of a green carcass and a pair of right and left beads are held and locked by bead lock mechanisms. Then air is fed into the green carcass and the shoulder former sections are moved together in synchronisation so that the green carcass is shaped toroidally and is integrated with a tread - belt sub-assembly. Also both side edges of the ply and side walls are wrapped around the beads so that the green tyre assembly is finished. Conventionally a tyre building apparatus for such single stage building of a tyre has a so-called rubber former in which a flexible and expansible bladder provides a central former section. There is a problem in this in that an open join is generated because when a tyre component such as ply is wound around the outer circumference of the former the joining operation is difficult to carry out.

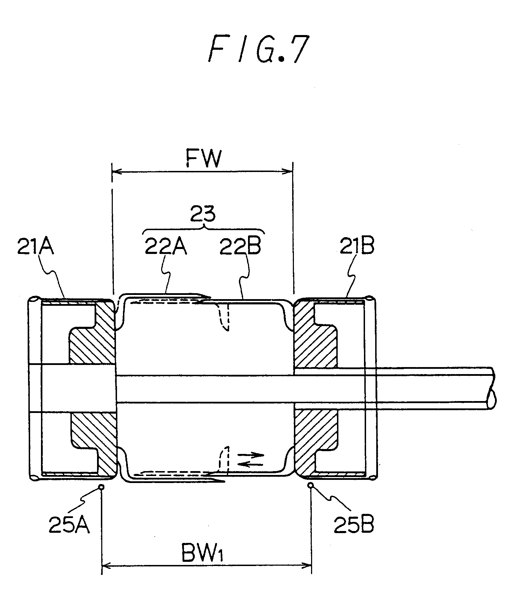

Accordingly, instead of the rubber former, a two-stage-overlapping-type forming apparatus was developed. In this type of apparatus, as shown in Figure 7, a pair of right and left cylindrical members 22A,22B having hard surfaces which overlap each other over their full width are mounted concentrically to provide the centre former section 23. When both former sections 21A,21B are moved to their furthest apart positions, both (right and left) cylindrical members 22A,22B acting together provide the predetermined necessary former width FW for assembling the green carcass. When both former sections 21A,21B are moved inwards to allow toroidal shaping of the green carcass, both cylindrical members 22A and 22B come to mutually overlap over their full width (as shown in Figure 7 by dotted lines), to give a shortened former width FW which is about half the open width.

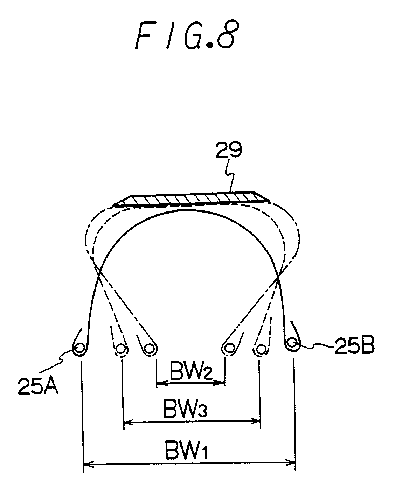

However, when a tyre is formed on such a two-stage-overlapping-type apparatus, the minimum distance between both shoulder former sections 21A,21B, in other words the distance BW₁ between the beads in the completed green tyre after shaping is, as shown in Figure 8, inevitably limited by the width of the hard cylindrical elements 22A,22B, which width is detected by the former width FW (in Figure 7). On the other hand as seen in Figure 8 since the distance between the beads BW₂ of a tyre as cured by a curing mould is much shorter than the distance BW₁ between the beads of the green tyre, the beads 25A and 25B are forcibly moved together during cure. As a result, undesirable wrinkles are generated in the bead chafers and side walls, so that defective tyres are produced. The object of the present invention is to solve such problems.

Also in Figure 8, a solid line shows the carcass profile of a green tyre made by the two-stage-overlapping-type forming apparatus, the one-dot chain line shows the carcass profile of a tyre cured in a metal mould, and the dashed line shows the carcass profile of a green tyre made by an apparatus of the present invention disclosed below. Numeral 29 indicates a tread.

### DISCLOSURE OF THE INVENTION

The present invention relates to a green tyre building apparatus comprising a driving section and a forming section supported by a shaft extended from the driving section, said forming section comprising a pair of right and left shoulder forming sections and a centre forming section characterised in that the centre forming section of the forming section comprises a pair of first former elements and a pair of second former elements arranged radially outside the first former elements so as to be movable in the axial direction, and the first and the second former elements can be overlapped over one another for the whole width of the elements into a four layered unit.

More particularly, the present invention relates to a green tyre building apparatus characterised in that
(1) the driving section comprises a shaft element and a driving mechanism, wherein
   (a) the shaft element comprises a main shaft and a sleeve slidably encasing the main shaft, and the main shaft and the sleeve respectively have an end extended from the driving section, and
   (b) the driving mechanism has a mechanism which moves simultaneously the main shaft and the sleeve oppositely to each other;
(2) the forming section comprises a pair of shoulder former sections and a centre former section, wherein
   (a) one of the shoulder former sections is attached to one end of the main shaft extended from the driving section, and the other of the shoulder former sections is attached to one end of the sleeve extended from the driving section,
   (b) the centre former section comprises a pair of first former elements and a pair of second former elements slidably supported by the first former elements, and the first and the second former elements can be overlapped one another over the whole width, so that the width of the centre former section can be shortened to about one quarter of the maximum, and
   (c) each end portion of the first forming elements is supported by an adjacent end portion of the shoulder former sections.

In the green tyre building apparatus, when the right and left shoulder former sections are moved to their further apart positions, a hard cylindrical surface of the necessary predetermined former width for the green carcass is formed by the first pair and the second pair of former elements, and when the right and the left shoulder former sections are moved to their nearest positions, the first and the second elements overlap one another over their whole width to give a four layered unit so that the former width is shortened to about one quarter to enable toroidal shaping of the green carcass.

### BRIEF DESCRIPTION OF THE DRAWINGS

An embodiment of the present invention is described below in detail with reference to the accompanying drawings in which:
Figure 1 is a plan view of part of a building apparatus showing a tyre forming section and a driving section therefor of the present invention;
Figure 2 is a part sectional view of a tyre forming section;
Figure 3 is a part plan view of Figure 2;
Figure 4 is a sectional view showing the forming section in a condition where the width is shortened to about one quarter;
Figure 5 is a sectional view taken along the line X-X of Figure 2;
Figure 6 is a part sectional view showing the forming section in a condition where the width is extended to the necessary predetermined forming width;
Figure 7 is a sectional view of a conventional two-stage-overlapping-type tyre building apparatus; and
Figure 8 is an explanatory illustration shoving the respective distances between the beads obtained by a conventional two-stage-overlapping-type tyre building apparatus, by a tyre building apparatus of the present invention, and in curing in a metal mould.

### BEST MODE CARRYING OUT THE INVENTION

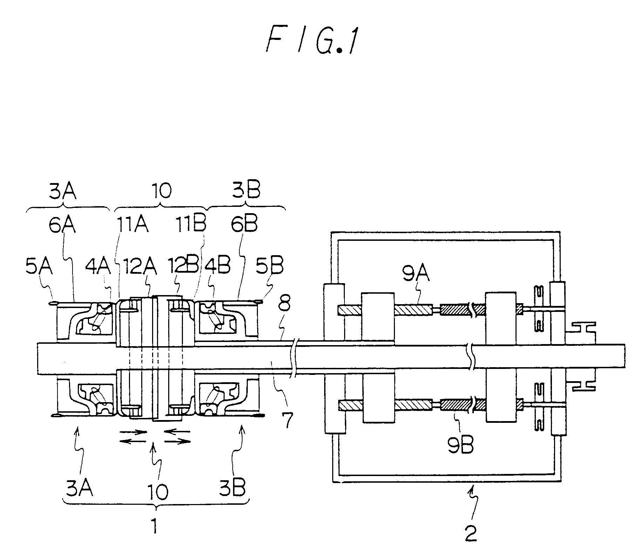

In Figure 1, numeral 1 represents a green tyre forming section and numeral 2 represents a supporting and driving section thereof (hereinafter simply referred to as the driving section).

A pair of right and left shoulder former sections 3A,3B are provided having bead lock mechanisms 4A,4B which are movable up and down by links actuated by air cylinders. A hard cylindrical surface is formed by supporting elasticated ply turn-over bladders 5A,5B from radially inside by means of cylindrical elements 6A,6B. The shoulder former section 3A is supported on one end of a main shaft 7, and the shoulder former section 3B is supported on one end of a concentric sleeve 8. The shoulder former sections 3A and 3B are movable along the common axis in both approaching and separating directions as shown by arrows. This movement is by means of a driving mechanism comprising rods 9A and 9B each having right handed threads and left handed threads, and a motor (not shown) rotating the rods.

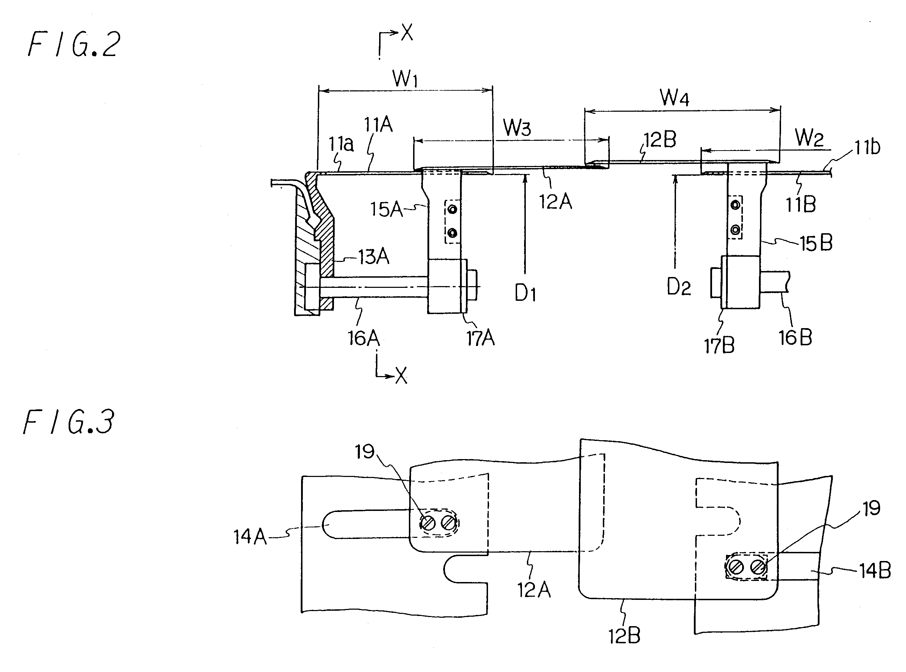

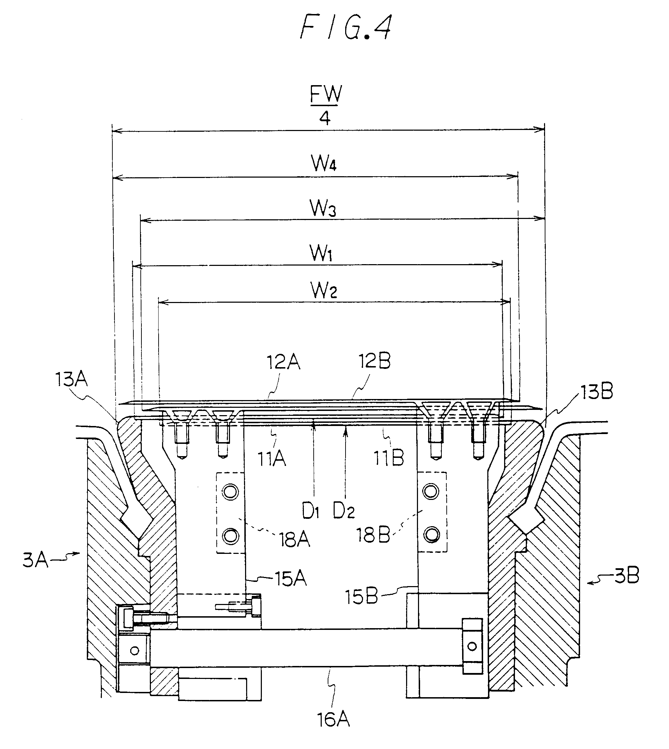

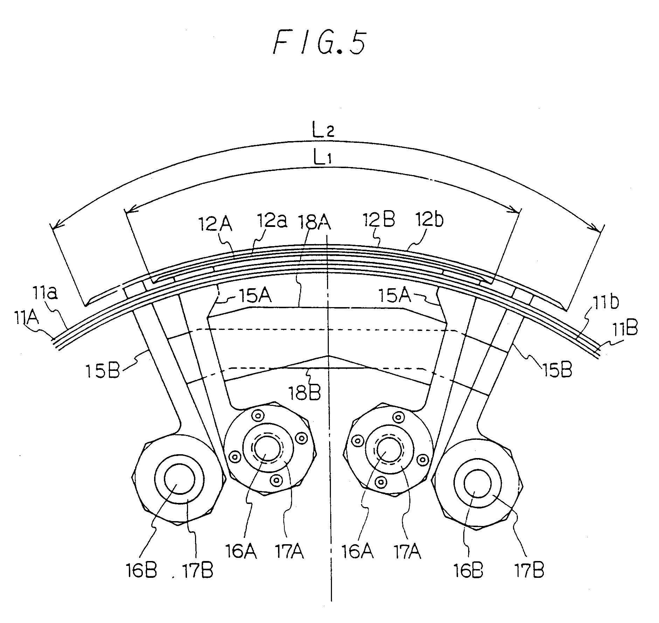

A centre former section 10 comprises a pair of right and left first former elements 11A,11B and a pair of right and left second former elements 12A,12B. As shown in Figures 2 to 4, thee first former elements 11A,11B are cylindrical bodies comprising solid, hard cylindrical surfaces 11a,11b and end flanges 13A,13B. Each end of the elements 11A,11B is removably and coaxially attached to the inside of the shoulder former sections 3A,3B respectively. The first former elements 11A,11B have almost the same width W₁,W₂ and slightly different diameters D₁,D₂ to each other, so that the right and the left first former elements can be mutually overlapped over their whole width W₁,W₂ as shown in Figure 4 when the shoulder former sections 3A,3B are moved to their nearest positions. As shown in Figure 5, the second former elements 12A,12B are former segments comprising hard cylindrical surfaces 12a,12b the centres of which coincide with those of the first former elements 11A,11B. These former segments have almost the same width W₃,W₄ but a different circumferential length L₁,L₂. The former segments respectively have elongated holes 14A,14B extending in the axial direction. The former segments 12A,12B are cantilevered respectively by arms 15A,15B projecting from the cylindrical surface 11a,11b of the first former elements 11A,11B through the elongated holes 14A,14B. The arms 15A,15B are slidably supported by guide rods 16A,16B respectively running in bearing portions 17A,17B, and are inter-connected by reinforcements 18A,18B. The guide rods 16A,16B project from the shoulder former sections 3A,3B in the axial direction. In Figures 2 to 4, numeral 19 represents bolts for fixing the second former elements 12A,12B to the arms 15A,15B.

Thus, the former segments 12A,12B are movable on the cylindrical surfaces 11a,11b of the first former elements 11A,11B along the elongated holes 14A,14B in the axial direction. As a result the former segments 12A,12B can be overlapped over their full width W₃,W₄ when the shoulder former sections 3A,3B are moved to the nearest positions.

In another embodiment, in place of the former segments 12A,12B as shown in Figure 1, cylinders of almost the same width having hard cylindrical surfaces and having axes coinciding with those of the first former elements 11A,11B may be employed. If such cylinders are employed as the second former elements 12A,12B at least two pairs of elongated holes extending in the axial direction are provided opposite to each other so that each cylinder is supported at least at two points by each end of a pair of arms projected from the cylindrical surfaces of the first former elements through the elongated holes.

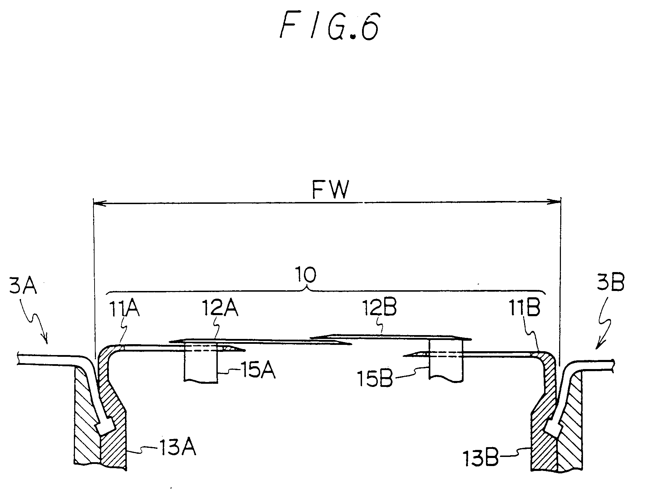

When the right and the left shoulder former sections 3A,3B are moved to the remotest positions, a hard cylindrical surface is formed, as shown in Figure 6, with the right and the left first former elements 11A,11B and the right and the left second former elements 12A,12B. The centre former section 10 is formed in this manner and the hard cylindrical surface thereof has a predetermined former width FW as required for green carcass assembly. When both shoulder former sections 3A,3B are moved to the nearest positions for toroidal shaping of the green carcass, the right and the left first former elements 11A,11B and the right and the left second former elements 12A,12B are overlapped with one another over their whole width thereof, as shown in Figure 4, to shorten the former width FW to about one quarter.

### INDUSTRIAL APPLICABILITY

According to the present invention, as mentioned above, a required forming width is obtained during the green carcass shaping, and the forming width is then shortened to about one quarter of this during the toroidal shaping. Thus the bead distance BW₃ obtained by the four-stage-overlapping-type former of the present invention is closer to the bead distance BW₂ obtained by a metal mould for curing then the bead distance BW₁ obtained by a conventional two-stage-overlapping-type former, as shown in Figure 8. As a result the distance that the beads 25A,25B move inwardly during cure is substantially reduced so that an efficient practical effect is obtained, that is, undesired defects such as wrinkles on the bead chafer or side wall are largely decreased and the tyre quality increases.

## Claims

1. A green tyre building apparatus comprising a driving section (2) and a forming section (1) supported by a shaft (7) extended from the driving section (2), said forming section (1) comprising a pair of right and left shoulder forming sections (3A,3B) and a centre forming section (10) characterised in that the centre forming section (10) of the forming section (1) comprises a pair of first former elements (11A,11B) and a pair of second former elements (12A,12B) arranged radially outside the first former elements (11A,11B) so as to be movable in the axial direction, and the first and the second former elements can be overlapped over one another for the whole width of the elements into a four layered unit.

2. A green tyre forming apparatus according to claim 1 characterised in that
(1) the driving section (2) comprises a shaft element and a driving mechanism; wherein
(a) the shaft element comprises a main shaft (7) and a sleeve (8) slidably encasing the main shaft (7), and the main shaft (7) and the sleeve (8) respectively have an end extending from the driving section (2), and
(b) the driving mechanism (2) has a mechanism which simultaneously moves the main shaft (7) and the sleeve (8) oppositely to each other;
(2) the forming section (1) comprises a pair of shoulder former sections (3A,3B) and a centre former section (10), wherein
(a) one of the shoulder former sections (3A) is attached to one end of the main shaft (7) extending from the driving section (2), and the other shoulder former section (3B) is attached to one end of the sleeve (8) extending from the driving section (2),
(b) the centre former section (10) comprises a pair of first former elements (11A,11B) and a pair of second former elements (12A,12B) supported by the first former elements so as to be slidable in the axial direction, and the first and the second former elements can be overlapped with one another, so that the width of the centre former section can be shortened to about one quarter of the maximum, and
(c) each end portion of the first former elements (11A,11B) is supported by an adjacent end portion of the shoulder sections.

3. A green tyre forming apparatus according to claim 1 or 2, characterised in that each of the second former elements (12A,12B) is a cylinder.

4. A green tyre forming apparatus according to claim 1 or 2, characterised in that each of the second former elements (12A,12B) is at least one former segment.

## Patentansprüche

1. Ein Rohreifen-Aufbauapparat mit einem Antriebsabschnitt (2) und einem Formgebungsabschnitt (1), der durch eine Welle (7) getragen ist, die sich von dem Antriebsabschnitt (2) erstreckt, wobei der Formgebungsabschnitt (1) ein Paar rechte und linke Schulterformgebungsabschnitte (3A, 3B) und einen Zentralformgebungsabschnitt (10) umfaßt,
dadurch **gekennzeichnet**,
daß der Zentralformgebungsabschnitt (10) des Formgebungsabschnittes (1) ein Paar erste Formgeberelemente (11A, 11B) und ein Paar zweite Formgeberelemente (12A, 12B) umfaßt, die radial außerhalb von den ersten Formgeberelementen (11A, 11B) angeordnet sind, um in der axialen Richtung bewegbar zu sein, und die ersten und zweiten Formgeberelemente übereinander für die ganze Breite der Elemente in eine vierlagigen Einheit überlappt sein können.

2. Ein Rohreifen-Formgebungsapparat nach Anspruch 1, dadurch **gekennzeichnet**, daß
(1) der Antriebsabschnitt (2) ein Wellenelement und einen Antriebsmechanismus umfaßt; worin
(a) das Wellenelement eine Hauptwelle (7) und eine Hülse (8) umfaßt, die gleitbar die Hauptwelle (7) ummantelt, und die Hauptwelle (7) bzw. die Hülse (8) ein Ende aufweisen, das sich von dem Antriebsabschnitt (2) erstreckt, und
(b) der Antriebsmechanismus (2) einen Mechanismus aufweist, der gleichzeitig die Hauptwelle (7) und die Hülse (8) entgegengesetzt zueinander bewegt;
(2) der Formgebungsabschnitt (1) ein Paar Schulterformgeberabschnitte (3A, 3B) und einen Zentralformgeberabschnitt (10) umfaßt, worin
(a) einer der Schulterformgeberabschnitte (3A) an einem Ende der Hauptwelle (7) angebracht ist, die sich von dem Antriebsabschnitt (2) erstreckt, und der andere Schulterformgeberabschnitt (3B) an einem Ende der Hülse (8) angebracht ist, die sich von dem Antriebsabschnitt (2) erstreckt,
(b) der Zentralformgeberabschnitt (10) ein Paar erste Formgeberelemente (11A, 11B) und ein Paar zweite Formgeberelemente (12A, 12B) umfaßt, die durch die ersten Formgeberelemente getragen sind, um in der axialen Richtung gleitbar zu sein, und die ersten und zweiten Formgeberelemente miteinander überlappt sein können, so daß die Breite des Zentralformgeberabschnittes auf ungefähr ein Viertel des Maximums verkürzt sein kann, und
(c) jeder Endteil der ersten Formgeberelemente (11A, 11B) durch einen benachbarten Endteil der Schulterabschnitte getragen ist.

3. Ein Rohreifen-Formgebungsapparat nach Anspruch 1 oder 2, dadurch **gekennzeichnet**, daß jedes der zweiten Formgeberelemente (12A, 12B) ein Zylinder ist.

4. Ein Rohreifen-Formgebungsapparat nach Anspruch 1 oder 2, dadurch **gekennzeichnet**, daß jedes der zweiten Formgeberelemente (12A, 12B) wenigstens ein Formgebersegment ist.

## Revendications

1. Appareil de confection d'un pneumatique non vulcanisé, comprenant une section d'entraînement (2) et une section de mise en forme (1) supportée par un arbre (7) qui dépasse de la section d'entraînement (2), la section de mise en forme (1) comprenant une paire de sections droite et gauche de mise en forme d'épaulement (3A, 3B) et une section centrale (10) de mise en forme, caractérisé en ce que la section centrale (10) de mise en forme de la section (1) de mise en forme comporte une paire de premiers éléments (11A, 11B) d'organe de mise en forme et une paire de seconds éléments (12A, 12B) d'organe de mise en forme disposés radialement à l'extérieur des premiers éléments (11A, 11B) d'organe de mise en forme afin qu'ils soient mobiles dans la direction axiale, et les premiers et seconds éléments d'organe de mise en forme peuvent se recouvrir mutuellement sur toute la largeur des éléments dans un ensemble à quatre couches.

2. Appareil de mise en forme d'un pneumatique non vulcanisé selon la revendication 1, caractérisé en ce que :
1) la section d'entraînement (2) comporte un élément d'arbre et un mécanisme d'entraînement, et est telle que :
(a) l'élément d'arbre possède un arbre principal (7) et un manchon (8) qui entoure de manière coulissante l'arbre principal (7), et l'arbre principal (7) et le manchon (8) ont respectivement une extrémité dépassant de la section d'entraînement (2), et
(b) le mécanisme d'entraînement (2) possède un mécanisme qui déplace simultanément l'arbre principal (7) et le manchon (8) en sens opposés, et
2) la section (1) de mise en forme comporte une paire de sections (3A, 3B) d'organe formateur d'épaulement et une section centrale (10) d'organe formateur, et est telle que :
(a) l'une des sections (3A) d'organe formateur d'épaulement est fixée à une première extrémité de l'arbre principal (7) qui dépasse de la section d'entraînement (2), et l'autre section (3B) d'organe formateur d'épaulement est fixée à une première extrémité du manchon (8) dépassant de la section d'entraînement (2),
(b) la section centrale (10) d'organe formateur comporte une paire de premiers éléments (11A, 11B) d'organe formateur et une paire de seconds éléments (12A, 12B) d'organe formateur supportés par les premiers éléments d'organe formateur afin qu'ils puissent coulisser dans la direction axiale, et les premiers et seconds éléments d'organe formateur peuvent se recouvrir mutuellement, si bien que la largeur de la section centrale d'organe formateur peut être réduite au quart environ de sa dimension maximale, et
(c) chaque partie d'extrémité des premiers éléments (11A, 11B) d'organe formateur est supportée par une partie adjacente d'extrémité des sections d'épaulement.

3. Appareil de mise en forme d'un pneumatique non vulcanisé selon la revendication 1 ou 2, caractérisé en ce que chacun des seconds éléments (12A, 12B) d'organe formateur est un cylindre.

4. Appareil de mise en forme d'un pneumatique non vulcanisé selon la revendication 1 ou 2, caractérisé en ce que chacun des seconds éléments (12A, 12B) d'organe formateur est au moins un segment d'organe formateur.
